# EUROPEAN PATENT SPECIFICATION

(11) **EP 4 146 575 B1**
(45) Date of publication and mention of the grant of the patent: **25.11.2026**
(21) Application number: 20934361.5
(22) Date of filing: 04.05.2020
(51) Int. Cl.: H04W 4/021, H04W 4/029, H04W 4/42, H04L 67/12, B66B 1/34, B66B 3/00, B66B 5/00, G06Q 50/10, G06Q 10/00, G06F 40/103, G06F 40/149, G06F 16/25, G06F 16/81

(54) **A SOLUTION FOR GENERATING DYNAMIC INFORMATION CONTENT OF A PEOPLE TRANSPORT SYSTEM**
LÖSUNG ZUR ERZEUGUNG VON DYNAMISCHEM INFORMATIONSINHALT EINES PERSONENTRANSPORTSYSTEMS
SOLUTION POUR GÉNÉRER UN CONTENU D'INFORMATIONS DYNAMIQUES D'UN SYSTÈME DE TRANSPORT DE PERSONNES

(43) Date of publication of application: 15.03.2023
(73) Proprietor: KONE Corporation, 00330 Helsinki (FI)
(72) Inventor: SILTANEN, Sanni, 00330 HELSINKI (FI); HEINONEN, Hanna, 00330 HELSINKI (FI)
(74) Representative: Berggren Oy
(86) International application number: PCT/FI2020/050297
(87) International publication number: WO 2021/224539

(56) References cited:
- EP-A1- 3 626 667
- CN-A- 103 231 956
- CN-A- 105 731 209
- CN-A- 108 046 073
- CN-A- 108 861 917
- CN-A- 109 850 711
- US-A1- 2016 171 455
- YIPING LI ET AL: "The Safety Remote Monitoring and Management System for Elevators Based on Digital Map", 2016 INTERNATIONAL CONFERENCE ON ROBOTS & INTELLIGENT SYSTEM (ICRIS), IEEE, 27 August 2016 (2016-08-27), pages 461 - 464, XP033016104, DOI: 10.1109/ICRIS.2016.98

## Description

### TECHNICAL FIELD

The invention concerns in general the technical field of people transport systems. Especially the invention concerns information content of people transport systems.

### BACKGROUND

Typically, for authoring, i.e. generating or producing, technical information content of technical systems an Extensible Markup Language (XML) -based industry standard data model, e.g. Darwin Information Typing Architecture (DITA) markup language, may be used. XML data model enables that rendering the technical information content to multiple output formats (e.g. online portals, pdf, etc.). In a typical static publishing scenario, publications comprising the technical information content may be created in advance for each pre-defined output. In XML a content specific document map, e.g. a DITA map if the XML data model is DITA, comprises references, i.e. links or pointers, to topics, i.e. objects, that should be included for that particular technical information content, i.e. publication. In other words, the document map may be considered as a collection or a list of references to the topics that should be included for that particular publication. Together these topics from one publication. The document map may further specify the order and hierarchy of the topics in the publication. The topics may be stored in a storage system, such as server, database, web service or similar. The same topics may be included in multiple publications by using publication specific document maps. The technical information content specified by the document map may be generated as one or more required output formats.

Typically, the technical information content may be generated either as whole publications in online portals or as electronic prints in Product Data Management (PDM) systems, intranets and/or extranets. Alternatively, the publication may be generated via browsing or a search interface, which requires user input by requesting the user to choose the content, which the user considers relevant, or to answer a predefined set of questions in a wizard to extract the appropriate topics to generate the publication. According to another typical solution, the technical information content may be queried from a web service to generate specific targeted technical information content to a specific application.

Typically, the document map may be used for generating for example manuals, user guides, maintenance instructions, installation instructions, inspection instructions, online helps, training and learning materials, marketing materials, and so on. For example, the technical information content may comprise maintenance instructions of a people transport system. The maintenance instructions may comprise a set of recommended maintenance actions, which may be created e.g. based on data analysis and fault codes obtained from the technical system. The set of recommended actions are predefined, and the maintenance instructions related to the set of recommended actions are always the same.

Typically, the generated technical information content, e.g. the set of recommended maintenance actions, may be presented for a user of the mobile device, e.g. a maintenance personnel, with a mobile device, e.g. mobile phone or tablet computer, as a visual and/or audio output. The presented output may comprise e.g. text content, image content, video content, and/or animation content. Alternatively or in addition, the presented output may comprise e.g. augmented reality content, virtual reality content, and/or mixed reality content.

A publication Yiping Li et al: "The Safety Remote Monitoring and Management System for Elevators Based on Digital Map", 2016 International Conference on Robots & Intelligent System (ICRIS), IEEE, 27 August 2016, pages 461-464, discloses a safety remote monitoring and management system for elevators based on a digital map.

A patent application CN 108 046 073 A discloses an elevator internet of things monitoring system, which comprises an elevator cloud platform, a maintenance and management system, an emergency rescue system, and a data display system.

A patent application CN 105731 209 A discloses intelligent prediction, diagnosis and maintenance system for elevator faults on the basis of the Internet of Things.

A patent application CN 103 231 956 A discloses a multifunctional intelligent remote alarm media machine for an elevator.

A patent application CN 109 850 711 A discloses an elevator door state detection method and system based on a 3D measurement technology.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method, a computing unit, a system, and a computer program for generating dynamic information content of a people transport system. Another objective of the invention is that the method, the computing unit, the system, and the computer program for generating dynamic information content of a people transport system enable real time adaptation of the information content according to the situation of the people transport system at the time.

The objectives of the invention are reached by a method, a computing unit, a system, and a computer program as defined by the respective independent claims.

According to a first aspect, a method for generating dynamic information content of a people transport system is provided, wherein the method comprises: receiving an information content request from a terminal device; obtaining real time status information representing the current status of at least part of the people transport system from a server system; generating a dynamic document map comprising references to one or more information content topics based at least on the obtained real time status information, wherein the dynamic document map is an Extensible Markup Language (XML) -based document map; retrieving the one or more information content topics referred in the dynamic document map from the server system; generating the dynamic information content based on the retrieved one or more information content topics from the server system; and providing the generated dynamic information content to the terminal device for displaying the dynamic information content.

The status information may comprise sensor-based data of the at least part of the people transport system, system specific data, service-related data of the at least part of the people transport system, and/or temporal data.

The system specific data may comprise identification information of the at least part of the people transport system, model information of the at least part of the people transport system, and/or location information.

Alternatively or in addition, the service-related data of the people transport system may comprise one or more service needs, one or more recommended actions, service history, spare part information, one or more info letters, product lifecycle management (PLM), information, and/or component lifecycle data.

Alternatively or in addition, the method may further comprise: obtaining terminal device specific information included in the information content request, and defining display format of the generated dynamic information content based on the obtained device specific information.

The display format may be at least one of the following: text, image, video; animation, audio, 3D animation, 3D simulation, augmented reality, virtual reality, and/or mixed reality.

Furthermore, the method may further comprise obtaining one or more 3D models from the server system for displaying the generated dynamic information content, if the display format is defined to be augmented reality, virtual reality, and/or mixed reality.

Alternatively or in addition, the status information and the one or more information content topics may be stored on the same one or more servers of the server system or on different one or more servers of the server system.

According to a second aspect, a computing unit for generating dynamic information content of a people transport system is provided, wherein the computing unit comprises: a processing unit comprising at least one processor, and a memory unit comprising at least one memory storing at least one portion of computer program code, wherein the processing unit being configured to cause the computing unit at least to perform: receive an information content request from a terminal device; obtain real time status information representing the current status of at least part of the people transport system from a server system; generate a dynamic document map comprising references to one or more information content topics based at least on the obtained real time status information, wherein the dynamic document map is an Extensible Markup Language (XML) -based document map; retrieve the one or more information content topics referred in the dynamic document map from the server system; generate the dynamic information content based on the retrieved one or more information content topics from the server system; and provide the generated dynamic information content to the terminal device for displaying the dynamic information content.

The status information may comprise sensor-based data of the at least part of the people transport system, system specific data, service-related data of the at least part of the people transport system, and/or temporal data.

The system specific data may comprise identification information of the at least part of the people transport system, model information of at least part of the people transport system, and/or location information.

Alternatively or in addition, the service-related data of the at least part of the people transport system may comprise one or more service needs, one or more recommended actions, service history, spare part information, one or more info letters, and/or component lifecycle data.

Alternatively or in addition, the computing unit according may further be configured to: obtain terminal device specific information included in the information content request, and define display format of the generated dynamic information content based on the obtained device specific information.

The display format may be at least one of the following: text, image, video; animation, audio, 3D animation, 3D simulation, augmented reality, virtual reality, and/or mixed reality.

Furthermore, the computing unit may further be configured to obtain one or more 3D models from the server system for displaying the generated dynamic information content, if the display format is defined to be augmented reality, virtual reality, and/or mixed reality.

According to a third aspect, a system for generating dynamic information content of a people transport system is provided, wherein the system comprises: a terminal device comprising one or more output devices for displaying the generated dynamic information content, a server system comprising one or more servers, and a computing unit as described above.

The computing unit may be an external unit, an internal unit of the terminal device, or an internal unit of the server system.

According to a fourth aspect, a computer program is provided, wherein the computer program comprises instructions which, when executed by at least one processor of a computing unit, cause the computing unit to perform the method as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1A illustrates schematically illustrates schematically an example of a system according to the invention.
Figure 1B illustrates schematically an example of a people transport system according to the invention.
Figure 2 illustrates schematically an example of a method according to the invention.
Figure 3 schematically illustrates examples of a dynamic information content generation process according to the invention.
Figure 4 schematically illustrates an example of components of a computing unit according to the invention.

### DESCRIPTION OF THE EXEMPLIFYING EMBODIMENTS

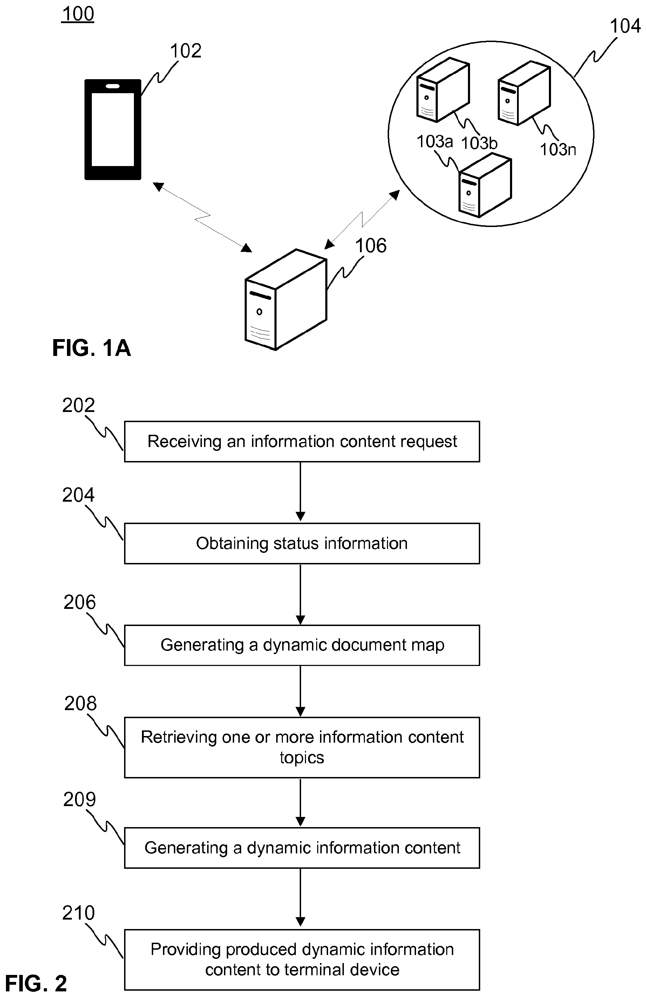

Figure 1A illustrates schematically an example of a system 100 for generating dynamic information content 140 of a people transport system 110 according to the invention. The system 100 comprises a terminal device 102, a server system 104 comprising one or more servers 103a-103n, and a computing unit 106. The terminal device 102 may comprise one or more output devices, e.g. touch screens or displays, for displaying the generated dynamic information content 140. The terminal device 102 may be a mobile phone, a smart phone, smart glasses, a tablet computer, a phablet, info screen, or smart watch or any other wearable device comprising one or more output devices. The computing unit 106 may be an external unit as illustrated in the example of Figure 1A. Alternatively, the computing unit 106 may be an internal unit of the terminal device 102 or an internal unit of the server system 104.

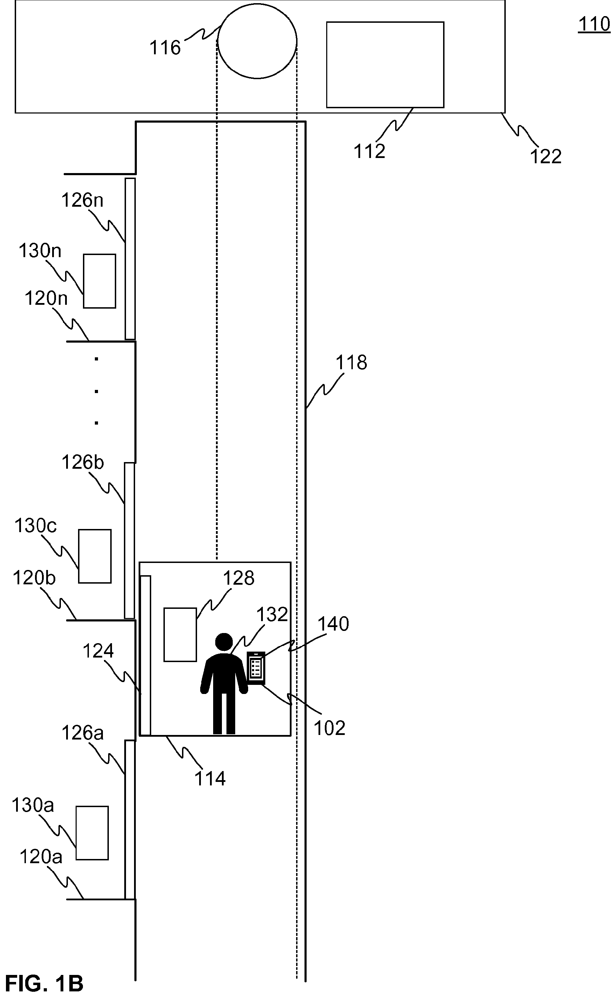

The people transport system 110 may be an elevator system, an escalator system or a moving walkaway system. Figure 1B illustrates schematically an example of a people transport system 110 according to the invention, wherein the embodiments of the system 100 according to the invention may be implemented as will be described. In the example of Figure 1B the people transport system 110 is an elevator system. The example elevator system 110 comprises an elevator control system 112, an elevator car 114, and a hoisting system 116 configured to drive the elevator car 114 along an elevator shaft 118 between landings 120a-120n. The elevator control system 112 may be configured to control the operation of the elevator system 110. In Figure 1B the elevator control system 112 locates in a machine room 122, but the elevator control system 112 may also locate in one of the landings 120a-120n. The elevator car 114 may comprise an elevator car door 124 and a door control unit, e.g. a door operator (for sake of clarity not shown in Figure 1B). Furthermore, each landing 120a-120n may comprise a landing door 126a-126n. The elevator system 110 may further comprise a car operating panel 128 arranged inside the elevator car 114 and a landing call panel 130a-130n arranged to each landing 120a-120n. The car operating panel 128 may comprise one or more elevator buttons for controlling at least one operation of the elevator system 110, e.g. to move the elevator car 114 to a desired landing, open or close the elevator doors (landing door 126a-126n and/or elevator car door 124), generating an elevator alarm, making an emergency call, etc. The landing call panel 130a-130n may comprise one or more elevator buttons for controlling the operation of the elevator system, e.g. to call the elevator car 114 to a desired landing, i.e. said landing 120a-120n wherein said landing call panel 130a-130n resides. In the example of Figure 1B a maintenance person 132, i.e. user of the terminal device 102, is performing one or more maintenance actions inside the elevator car 114 according to the generated dynamic information content 140 displayed on the terminal device 102. For sake of clarity the computing unit 106 and the server system 104 of the system according to the invention are not shown in Figure 1B. The generation of the dynamic information content 140 will be described later in this application. Figure 1B illustrates only one non-limiting example of the elevator system 110 being the people transport system according to the invention and the elevator system 110 according to the invention may comprise one or more other entities, i.e. components, than the entities presented in Figure 1B.

The generated information content 140, e.g. publication or documentation, may relate to at least part of the people transport system 110. In other words, the generated information content 140 may relate to at least one entity of the people transport system 110, e.g. at least one entity of the people transport system 110 described above referring to Figure 1B or any other entity of the people transport system 110, or a group of entities of the people transport system 110. Alternatively or in addition, the generated information content 140 may relate to the people transport system 110 in its entirely.

Next an example of the method according to the invention is described by referring to Figure 2. Figure 2 schematically illustrates the invention as a flow chart.

At a step 202, the computing unit 106 receives an information content request from the terminal device 102. The information content request may relate e.g. for a maintenance, an inspection, an assembly, etc. of at least part of the people transport system 110. The information content request may be provided to computing unit 106 from the terminal device 102 in response to detecting the terminal device 102 in proximity of the people transport system 110, i.e. within an area surrounding the people transport system 110, based on position information of the terminal device 102, if one or more maintenance needs, e.g. service needs, have been received from one or more entities of the people transport system 110. Alternatively, the information content request may be provided to computing unit 106 from the terminal device 102 in response to receiving user input by the terminal device 102 from the user 132 of the terminal device 102.

At a step 204, the computing unit 106 obtains status information 304a, 304b representing the current status of at least part of the people transport system 110 from the server system 104. The obtained status information 304a, 304b may comprise sensor-based data of the at least part of the people transport system 110, system specific data, service-related data of the at least part of the people transport system 110, and/or temporal data. The sensor-based data may comprise, but is not limited to, number of times at least one entity of the people transport system 110 is used, e.g. number of door openings, use hours of the at least one entity of the people transport system, temperature, vibrations, and/or any other data of the at least part of the people transport system 110 detectable with one or more senor devices. The temporal data may comprise e.g. at least one of the following: date, time or weekday. This enables that the obtained status information 304a, 304b may be timely relevant. The system specific data may comprise identification information of the at least part of the people transport system 110 (e.g. component or equipment number), model information of the at least part of the people transport system 110 (e.g. model number and/or name), and/or location information of the at least part of the people transport system 110 (e.g. physical location of the people transport system 110 and/or a specific location inside the people transport system, e.g. elevator car roof top if the people transport system 110 is an elevator system). The service-related data may comprise one or more service needs, one or more recommended actions, service history, spare part information, one or more info letters, product lifecycle management (PLM) information, and/or component lifecycle data. The PLM information may comprise information relating product versions and design history e.g. changes that are made, spare parts used etc. The component life cycle data may comprise data representing history data and/or data analytics data related to the at least part of the people transport system 110, e.g. probable time before breaking down, i.e. lifespan, and/or use statistics, such as opening times, rotation times, etc.

At a step 206, the computing unit 106 generates a dynamic document map 302a-302c comprising references, i.e. links or pointers, to one or more information content topics, i.e. objects, stored to the server system 104 based on at least on the obtained status information 304a, 304b. The document map 302a-302c is an Extensible Markup Language (XML) -based document map. Preferably, the document map may be a Darwin Information Typing Architecture (DITA) map. The status information 304a, 304b and the one or more information content topics may be stored on the same one or more servers 103a-103n of the server system 104 or on different one or more servers 103a-103n of the server system 104. According to an example, the one or more servers 103a-103n to which the one or more topics may be stored may comprise a database or a web service.

At a step 208, the computing unit 106 retrieves the one or more information content topics referred in the document map 302a-302c from the server system 104 and generates the dynamic information content 140 based on the retrieved one or more information content topics from the server system 104 at a step 209.

At a step 210, the computing unit 106 provides the produced dynamic information content 140 to the terminal device 102 for displaying the dynamic information content via the one or more output devices of the terminal device 102.

The computing unit 106 may provide the produced dynamic information content 140 to the terminal device 102 as a non-recurrent, i.e. once-only, transmission. Alternatively, the computing unit 106 may continue providing the produced dynamic information content 140 to the terminal device 102 during a predetermined time or until receiving an ending request from the terminal device 102. This enables that the dynamic information content may be adapted based on real time status information. At least some status information 304a, 304b, e.g. the sensor-related data and/or the service-related data of the people transport system 110, may be obtained continuously during the providing of the generated dynamical information content 140 to the terminal device 102. Alternatively or in addition, at least some status information 304a, 304b, e.g. the system specific data, may be obtained once. The ending request may be provided to computing unit 106 from the terminal device 102 in response to detecting that the terminal device 102 exits from the proximity of the people transport system 110, i.e. the area surrounding the the people transport system 110, based on position information of the terminal device 102. Alternatively, the ending request may be provided to computing unit 106 from the terminal device 102 in response to receiving user input by the terminal device 102 from the user 132 of the terminal device 102.

Typically, the generated dynamic information content 140 may comprise, but is not limited to, for example manuals, user guides, maintenance instructions, installation instructions, inspection instructions, online helps, training and learning materials, and/or marketing materials of at least one entity of the people transport system 110. According to a non-limiting example, the generated dynamic information content 140 may comprise, e.g. maintenance instructions of at least one entity, e.g. elevator doors, elevator motor of the hoisting system 116, and/or elevator car 114 if the people transport system 110 is an elevator system. Because, the computing unit 106 uses the obtained status information representing the current status of at least part of the people transport system 110, the individual information content 140 may be dynamically generated for each situation. This enables that the information content 140 may be adapted according to the current status of the at least part of the people transport system 110.

According to an example of the invention, the method may further comprise obtaining terminal device 102 specific information included in the information content request received from the terminal device 102 at the step 202 and defining display format of the generated dynamic information content based on the obtained device specific information. This enables that the generated dynamic information content 140 may be different depending on the displaying terminal device 102. The terminal device 102 specific information may comprise e.g. type of the terminal device 102 and/or one or more display format that the terminal device 102 supports. The display format may be, but is not limited to, at least one of the following: text, image, video, animation, audio, 3D animation, 3D simulation, augmented reality (AR), virtual reality (VR), and/or mixed reality (MR). According to an example of the invention, the image may be a 360 image and/or the video may be a 360 video. According to an example of the invention, the augmented reality may comprise augmented objects, augmented animations, augmented audio, augmented information, and/or augmented sensory output. For example, if the terminal device 102 is smart glasses, the computing unit 106 may provide AR information, whereas on smart watch only compressed information may be provided, and on mobile phone rich information, e.g. text, images, videos etc., may be shown, but no AR information. Alternatively or in addition, if the terminal device 102 is the smart watch or the mobile phone, the generated dynamic information content 140 may comprise vibration sensory output. Alternatively or in addition, if the terminal device 102 is the mobile phone equipped with headphones, the generated dynamic information content 140 may comprise augmented audio. The compressed information may comprise, e.g. a short text command or a simple image command. For example, if the generated dynamic information content 140 comprises instruction to open the car operating panel 128 of the elevator system 110, the compressed information may comprise just short text command "Open car operating panel", an image of the panel with a symbol meaning opening, or an image of the panel with an opening arrow added to the image. The compressed information may be simplified technical language instead of using natural language. Alternatively, some other linguistic or information theory may be used to compress the information.

According to an example of the invention, the method may further comprise obtaining one or more 3D models 306 from the server system 104 for displaying the generated dynamic information content 140, if the display format is defined to be augmented reality, virtual reality, and/or mixed reality. A 3D model 306 is a digital file of an object that may be created using 3D CAD software or through 3D scanning. It may be displayed as a two-dimensional image using 3D rendering or visualization. The representation of the 3D model 306 may be based e.g. on a solid model representation or a surface model representation. The solid model defines the volume of the object that they represent. Solid models may preferably be used for engineering simulations, e.g. load analysis or heat transfer analysis. The surface model represents the surface of an object, like a shell. The surface models may preferably be used for communicating model appearance.

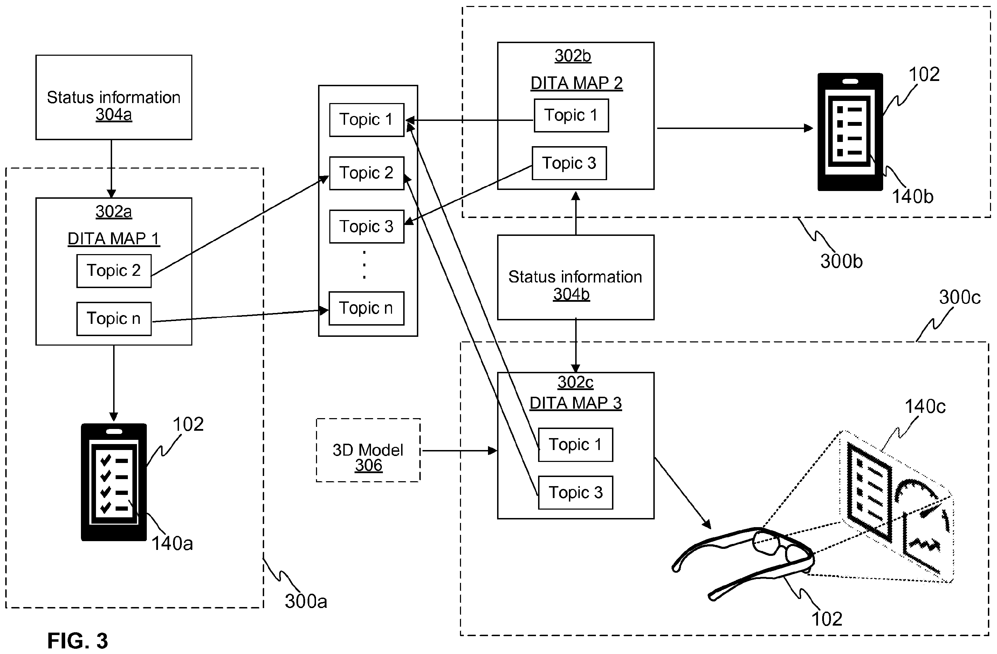

Figure 3 schematically illustrates examples of dynamic information content 140 generation process. In Figure 3 three different example dynamic information content 140a-140b generation processes 300a-300c are illustrated, wherein in each process different dynamic information content 140a-140c, e.g. maintenance and/or installation instructions, is generated for the same at least part of the people transport system 110, e.g. an elevator door (landing door 126a-126n and/or elevator car door 124), an elevator car 114, or an elevator motor, of an elevator system, depending on the status of the entity of the people transport system 110 and the type of the terminal device 102. In the example process 300a the status information is obtained at different time than in the example processes 300b and 300c. In other words, the status information 304a obtained in the example process 300a differs from the status information 304b obtained in the example processes 300b and 300c. The difference between the example processes 300b and 300c is that the terminal device specific information obtained in the process 300b comprises information that the type of the terminal device 102 is a mobile phone and the terminal device specific information obtained in the process 300c comprises information that the type of the terminal device 102 is smart glasses capable to display AR information, e.g. augmented objects, augmented animations, augmented audio, augmented information, and/or augmented sensory output.

In the example process 300a the document map 1 302a generated based on the obtained status information 304a comprises references to information content topics 2 and n. Moreover, the dynamic information content 140a is generated based on retrieved information content topics 2 and n referred in the document map 1 302a and the generated dynamic information content 140a is displayed by the mobile device 102. In the example process 300b the document map 2 302b generated based on the obtained status information 304b comprises references to information content topics 1 and 3. Moreover, the dynamic information content 140b is generated based on retrieved information content topics 1 and 3 referred in the document map 2 302b and the generated dynamic information content 140b is displayed by the mobile device 102. Because of different status information, the generated dynamic information content 140b of the example process 300b differs from the generated dynamic information content 140a of the example process 300a, although the at least part of the people transport system 110 is the same in the both examples. In the example process 300c the document map 3 302c generated based on the obtained status information 304b comprises references to information content topics 1 and 2. Moreover, the dynamic information content 140c is generated based on retrieved information content topics 1 and 3 referred in the document map 2 302b and the generated dynamic information content 140b is displayed by the smart glasses. Furthermore, in the example process 300c a 3D model 306 is obtained for displaying the generated dynamic information content so that in AR one or more components may be, e.g. highlighted by superimposing said one or more components on top of the view. Because of different terminal device specific information, the generated dynamic information content 140c of the example process 300c differs from the generated dynamic information content 140b of the example process 300b, although the at least part of the people transport system 110 and the obtained status information 304b are the same in the both examples.

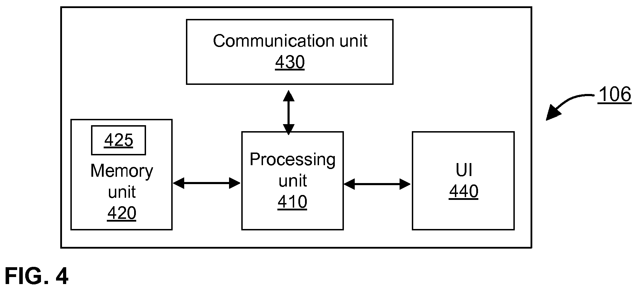

Figure 4 schematically illustrates an example of components of the computing unit 106 according to the invention. The computing unit 106 may comprise a processing unit 410 comprising at least one processor, a memory unit 420 comprising at least one memory, a communication unit 430 comprising one or more communication devices, and possibly a user interface (UI) unit 440. The memory unit 420 may store portions of computer program code 425 and any other data, and the processing unit 410 may cause the computing unit 106 to implement the method as described by executing at least some portions of the computer program code 425 stored in the memory unit 420. The communication unit 430 may be based on at least one known communication technologies, either wired or wireless, in order to exchange pieces of information as described earlier. The communication unit 430 provides an interface for communication with any external unit, such as the terminal device 102, the server system 104, database and/or any external systems. The communication unit 430 may comprise one or more communication devices, e.g. radio transceiver, antenna, etc. The user interface 440 may comprise I/O devices, such as buttons, keyboard, touch screen, microphone, loudspeaker, display and so on, for receiving input and outputting information. The computer program 425 may be stored in a non-statutory tangible computer readable medium, e.g. an USB stick, a memory card, or a CD-ROM disc. Some non-limiting examples of the computing unit 106 may e.g. be a server, cloud server, personal computer, laptop computer, computing circuit, or a network of computing devices.

At least some embodiments of the invention as defined above enable generating system and/or entity specific information content. At least some embodiments of the invention enable that the generated information content may be adapted based on real time status information, which in turn enables displaying by the terminal device 102 only the information content relevant at the time of displaying the information content. For example, if a maintenance person 132 using the terminal device 102 displaying the generated information content 140, e.g. maintenance instructions or installation instructions, is adjusting e.g. at least one component of the people transport system 110 may immediately see how the adjustment affects to the sensor reading and when the task is completed, that sensor value is no more displayed for the maintenance person 132. This allows the maintenance person 132 to concentrate on the task at hand. At least some embodiments of the invention as described above enable generating information content that is in a right level of details and right type of content for the terminal device 102. For example, safety relevant data may be displayed in right context and at right time, instead of presenting the safety relevant data at the beginning of the publication as done typically in known solutions. Moreover, the information may be presented in easily digestible format and AR features are easily available.

The specific examples provided in the description given above should not be construed as limiting the applicability and/or the interpretation of the appended claims. Lists and groups of examples provided in the description given above are not exhaustive unless otherwise explicitly stated.

## Claims

1. A method for generating dynamic information content (140, 140a, 140b, 140c) of a people transport system (110), the method comprising:
receiving (202) an information content request from a terminal device (102),
**characterized in** obtaining (204) real time status information (304a, 304b) representing the current status of at least part of the people transport system (110) from a server system (104),
generating (206) a dynamic document map (302a, 302b, 302b) comprising references to one or more information content topics based at least on the obtained real time status information (304a, 304b), wherein the dynamic document map is an Extensible Markup Language (XML) -based document map,
retrieving (208) the one or more information content topics referred in the dynamic document map (302a, 302b ,302b) from the server system (104),
generating (209) the dynamic information content (140, 140a, 140b, 140c) based on the retrieved one or more information content topics from the server system (104), and
providing (210) the generated dynamic information content (140, 140a, 140b, 140c) to the terminal device (102) for displaying the dynamic information content (140, 140a, 140b, 140c).

2. The method according to claim 1, wherein the status information (304a, 304b) comprises sensor-based data of the at least part of the people transport system (110), system specific data, service-related data of the at least part of the people transport system (110), and/or temporal data.

3. The method according to claim 2, wherein the system specific data comprises identification information of the at least part of the people transport system (110), model information of the at least part of the people transport system (110), and/or location information.

4. The method according to claim 2 or 3, wherein the service-related data of the people transport system (110) comprises one or more service needs, one or more recommended actions, service history, spare part information, one or more info letters, product lifecycle management (PLM), information, and/or component lifecycle data.

5. The method according to any of the preceding claims further comprising:
obtaining terminal device specific information included in the information content request, and
defining display format of the generated dynamic information content (140, 140a, 140b, 140c) based on the obtained device specific information, wherein the display format is at least one of the following: text, image, video; animation, audio, 3D animation, 3D simulation, augmented reality, virtual reality, and/or mixed reality.

6. The method according to claim 5, further comprising obtaining one or more 3D models (306) from the server system (104) for displaying the generated dynamic information content (140, 140a, 140b, 140c), if the display format is defined to be augmented reality, virtual reality, and/or mixed reality.

7. A computing unit (106) for generating dynamic information content (140, 140a, 140b, 140c) of a people transport system (110), the computing unit (106) comprises:
- a processing unit (410) comprising at least one processor, and
- a memory unit (420) comprising at least one memory storing at least one portion of computer program code (425),
the processing unit (410) being configured to cause the computing unit (106) at least to perform:
receive an information content request from a terminal device (102),
**characterized in** to cause the computing unit(106) to:
obtain real time status information (304a, 304b) representing the current status of at least part of the people transport system (110) from a server system (104),
generate a dynamic document map (302a, 302b ,302b) comprising references to one or more information content topics based at least on the obtained real time status information (304a, 304b), wherein the dynamic document map is an Extensible Markup Language (XML) -based document map,
retrieve the one or more information content topics referred in the dynamic document map (302a, 302b ,302b) from the server system (104),
generate the dynamic information content (140, 140a, 140b, 140c) based on the retrieved one or more information content topics from the server system (104), and
provide the generated dynamic information content (140, 140a, 140b, 140c) to the terminal device (102) for displaying the dynamic information content (140, 140a, 140b, 140c).

8. The computing unit (106) according to claim 7, wherein the status information (304a, 304b) comprises sensor-based data of the at least part of the people transport system (110), system specific data, service-related data of the at least part of the people transport system (110), and/or temporal data.

9. The computing unit (106) according to claim 8, wherein the system specific data comprises identification information of the at least part of the people transport system (110), model information of at least part of the people transport system (110), and/or location information.

10. The computing unit (106) according to claim 8 or 9, wherein the service-related data of the at least part of the people transport system (110) comprises one or more service needs, one or more recommended actions, service history, spare part information, one or more info letters, and/or component lifecycle data.

11. The computing unit (106) according to any of claims 7 to 10, further configured to:
obtain terminal device specific information included in the information content request, and
define display format of the generated dynamic information content (140, 140a, 140b, 140c) based on the obtained device specific information, wherein the display format is at least one of the following: text, image, video; animation, audio, 3D animation, 3D simulation, augmented reality, virtual reality, and/or mixed reality.

12. The computing unit (106) according to claim 11, further configured to obtain one or more 3D models (306) from the server system (104) for displaying the generated dynamic information content (140, 140a, 140b, 140c), if the display format is defined to be augmented reality, virtual reality, and/or mixed reality.

13. A system (100) for generating dynamic information content (140, 140a, 140b, 140c) of a people transport system (110), comprising:
- a terminal device (102) comprising one or more output devices for displaying the generated dynamic information content (140, 140a, 140b, 140c),
- a server system (104) comprising one or more servers (103a-103n), and
- a computing unit (106) according to any of claims 7 to 12.

14. The system (100) according to claim 13, wherein the computing unit (106) is an external unit, an internal unit of the terminal device (102), or an internal unit of the server system (104).

15. A computer program (425) comprising instructions which, when executed by at least one processor of a computing unit (106), cause the computing unit (106) to perform the method according to any of claims 1 to 6.

## Patentansprüche

1. Verfahren zum Erzeugen dynamischer Informationsinhalte (140, 140a, 140b, 140c) eines Personentransportsystems (110), das Verfahren umfassend:
Empfangen (202) einer Anfrage nach einem Informationsinhalt von einer Endgerätvorrichtung (102), **gekennzeichnet durch**
Erhalten (204) von Echtzeitstatusinformationen (304a, 304b), die den aktuellen Status mindestens eines Teils des Personentransportsystems (110) darstellen, von einem Serversystem (104),
Erzeugen (206) einer dynamischen Dokumentenstrukturkarte (302a, 302b, 302b), die Referenzen auf ein oder mehrere Informationsinhaltethemen mindestens basierend auf erfassten Echtzeitstatusinformationen (304a, 304b) umfasst, wobei die dynamische Dokumentenstrukturkarte eine auf Extensible Markup Language (XML) basierende Dokumentenstrukturkarte ist, Abrufen (208) des einen oder der mehreren in der dynamischen Dokumentenstrukturkarte (302a, 302b, 302b) referenzierten Informationsinhaltethemen vom Serversystem (104), Erzeugen (209) des dynamischen Informationsinhalts (140, 140a, 140b, 140c) basierend auf den vom Serversystem (104) abgerufenen ein oder mehreren Informationsinhaltethemen, und
Bereitstellen (210) des erzeugten dynamischen Informationsinhalts (140, 140a, 140b, 140c) an die Endgerätvorrichtung (102) zur Anzeige des dynamischen Informationsinhalts (140, 140a, 140b, 140c).

2. Verfahren nach Anspruch 1, wobei die Statusinformationen (304a, 304b) sensorbasierte Daten des mindestens einen Teils des Personentransportsystems (110), systemspezifische Daten, dienstbezogene Daten des mindestens einen Teils des Personentransportsystems (110) und/oder zeitbezogene Daten umfassen.

3. Verfahren nach Anspruch 2, wobei die systemspezifischen Daten Identifikationsinformationen des mindestens einen Teils des Personentransportsystems (110), Modellinformationen des mindestens einen Teils des Personentransportsystems (110) und/oder Standortinformationen umfassen.

4. Verfahren nach Anspruch 2 oder 3, wobei die dienstbezogenen Daten des Personentransportsystems (110) einen oder mehrere Dienstbedarf, eine oder mehrere empfohlene Maßnahmen, die Diensthistorie, Ersatzteilinformationen, einen oder mehrere Informationsbriefe, Informationen zum Produktlebenszyklusmanagement (PLM) und/oder Daten zum Lebenszyklus von Komponenten umfassen.

5. Verfahren nach einem der vorstehenden Ansprüche, ferner umfassend: Erhalten von endgerätespezifischen Informationen, die in der Anfrage nach Informationsinhalten enthalten sind, und
Definieren des Anzeigeformats der erzeugten dynamischen Informationsinhalte (140, 140a, 140b, 140c) basierend auf der ermittelten gerätespezifischen Informationen, wobei das Anzeigeformat mindestens eines von Folgendem ist: Text, Bild, Video; Animation, Audio, 3D-Animation, 3D-Simulation, Augmented Reality, Virtual Reality und/oder Mixed Reality.

6. Verfahren nach Anspruch 5, das ferner das Erhalten eines oder mehrerer 3D-Modelle (306) vom Serversystem (104) zur Darstellung der generierten dynamischen Informationsinhalte (140, 140a, 140b, 140c) umfasst, sofern das Anzeigeformat als Augmented Reality, Virtual Reality und/oder Mixed Reality definiert ist.

7. Recheneinheit (106) zur Erzeugung dynamischer Informationsinhalte (140, 140a, 140b, 140c) eines Personentransportsystems (110), wobei die Recheneinheit (106) Folgendes umfasst:
- eine Verarbeitungseinheit (410), umfassend mindestens einen Prozessor, und
- eine Speichereinheit (420), die mindestens einen Speicher umfasst, in dem mindestens ein Abschnitt eines Computerprogrammcodes (425) gespeichert ist, wobei die Verarbeitungseinheit (410) konfiguriert ist, um die Recheneinheit (106) zu veranlassen, mindestens Folgendes auszuführen:
Empfangen einer Anfrage nach einem Informationsinhalt von einer Endgerätvorrichtung (102),
**dadurch gekennzeichnet dass** die Recheneinheit (106) veranlasst wird zum:
Erhalten von Echtzeitstatusinformationen (304a, 304b), die den aktuellen Status mindestens eines Teils des Personentransportsystems (110) darstellen, von einem Serversystem (104),
Erzeugen einer dynamischen Dokumentenkarte (302a, 302b, 302b), die Verweise auf ein oder mehrere Informationsinhaltethemen umfasst, die mindestens auf den erhaltenen Echtzeitstatusinformationen (304a, 304b) basieren, wobei die dynamische Dokumentenkarte eine auf Extensible Markup Language (XML) basierende Dokumentenkarte ist,
Abrufen der einen oder mehreren Informationsinhaltethemen, auf die in der dynamischen Dokumentenkarte (302a, 302b, 302b) Bezug genommen wird, vom Serversystem (104),
Erzeugen des dynamischen Informationsinhalts (140, 140a, 140b, 140c) basierend auf der einen oder den mehreren vom Serversystem (104) abgerufenen Informationsinhaltethemen und
Bereitstellen des erzeugten dynamischen Informationsinhalts (140, 140a, 140b, 140c) an die Endgerätvorrichtung (102) zur Anzeige des dynamischen Informationsinhalts (140, 140a, 140b, 140c).

8. Recheneinheit (106) nach Anspruch 7, wobei die Statusinformationen (304a, 304b) sensorbasierte Daten des mindestens einen Teils des Personentransportsystems (110), systemspezifische Daten, dienstbezogene Daten des mindestens einen Teils des Personentransportsystems (110) und/oder zeitbezogene Daten umfassen.

9. Recheneinheit (106) nach Anspruch 8, wobei die systemspezifischen Daten Identifikationsinformationen des mindestens einen Teils des Personentransportsystems (110), Modellinformationen des mindestens einen Teils des Personentransportsystems (110) und/oder Standortinformationen umfassen.

10. Recheneinheit (106) nach Anspruch 8 oder 9, wobei die dienstbezogenen Daten des mindestens Teils des Personentransportsystems (110) einen oder mehrere Dienstbedarf, eine oder mehrere empfohlene Maßnahmen, eine Diensthistorie, Ersatzteilinformationen, einen oder mehrere Informationsbriefe und/oder Daten zum Lebenszyklus von Komponenten umfassen.

11. Recheneinheit (106) nach einem der Ansprüche 7 bis 10, die ferner konfiguriert ist zum:
Erhalten der in der Anfrage nach Informationsinhalten für die Endgerätvorrichtung spezifischen Informationen und
Definieren des Anzeigeformats der erzeugten dynamischen Informationsinhalte (140, 140a, 140b, 140c) basierend auf der ermittelten gerätespezifischen Informationen, wobei das Anzeigeformat mindestens eines von Folgendem ist: Text, Bild, Video; Animation, Audio, 3D-Animation, 3D-Simulation, Augmented Reality, Virtual Reality und/oder Mixed Reality.

12. Recheneinheit (106) nach Anspruch 11, die ferner konfiguriert ist, um ein oder mehrere 3D-Modelle (306) vom Serversystem (104) abzurufen, um die generierten dynamischen Informationsinhalte (140, 140a, 140b, 140c) abzurufen, sofern das Anzeigeformat als Augmented Reality, Virtual Reality und/oder Mixed Reality definiert ist.

13. System (100) zum Erzeugen dynamischer Informationsinhalte (140, 140a, 140b, 140c) eines Personentransportsystems (110), umfassend:
- eine Endgerätvorrichtung (102), die eine oder mehrere Ausgabevorrichtungen zur Anzeige der erzeugten dynamischen Informationsinhalte (140, 140a, 140b, 140c) umfasst,
- ein Serversystem (104), das einen oder mehrere Server (103a-103n) umfasst, und
- eine Recheneinheit (106) nach einem der Ansprüche 7 bis 12.

14. System (100) nach Anspruch 13, wobei die Recheneinheit (106) eine externe Einheit, eine interne Einheit der Endgerätvorrichtung (102) oder eine interne Einheit des Serversystems (104) ist.

15. Computerprogramm (425), das Anweisungen umfasst, die bei der Ausführung durch mindestens einen Prozessor einer Recheneinheit (106) die Recheneinheit (106) veranlassen, das Verfahren nach einem der Ansprüche 1 bis 6 auszuführen.

## Revendications

1. Procédé permettant de générer un contenu informationnel dynamique (140, 140a, 140b, 140c) d'un système de transport de personnes (110), le procédé comprenant :
la réception (202) d'une demande de contenu informationnel à partir d'un dispositif terminal (102), **caractérisé par**
l'obtention (204) d'informations d'état en temps réel (304a, 304b) représentant l'état actuel d'au moins une partie du système de transport de personnes (110) à partir d'un système serveur (104),
la génération (206) d'une carte de document dynamique (302a, 302b, 302b) comprenant des références à un ou plusieurs sujets de contenu informationnel sur la base au moins des informations d'état en temps réel obtenues (304a, 304b), dans lequel la carte de document dynamique est une carte de document basée sur le langage XML (Extensible Markup Language, langage de balisage extensible), la récupération (208) du ou des sujets de contenu informationnel référencés dans la carte de document dynamique (302a, 302b, 302b) à partir du système serveur (104), la génération (209) du contenu informationnel dynamique (140, 140a, 140b, 140c) sur la base du ou des sujets de contenu informationnel récupérés à partir du système serveur (104), et
la fourniture (210) du contenu informationnel dynamique généré (140, 140a, 140b, 140c) au dispositif terminal (102) en vue de l'affichage du contenu informationnel dynamique (140, 140a, 140b, 140c).

2. Procédé selon la revendication 1, dans lequel les informations d'état (304a, 304b) comprennent des données basées sur des capteurs de l'au moins une partie du système de transport de personnes (110), des données spécifiques au système, des données liées au service de l'au moins une partie du système de transport de personnes (110) et/ou des données temporelles.

3. Procédé selon la revendication 2, dans lequel les données spécifiques au système comprennent des informations d'identification de l'au moins une partie du système de transport de personnes (110), des informations de modèle de l'au moins une partie du système de transport de personnes (110) et/ou des informations de localisation.

4. Procédé selon la revendication 2 ou 3, dans lequel les données liées au service du système de transport de personnes (110) comprennent un ou plusieurs besoins de service, une ou plusieurs actions recommandées, un historique des services, des informations sur les pièces de rechange, une ou plusieurs lettres d'information, des informations sur la gestion du cycle de vie des produits (PLM) et/ou des données de cycle de vie des composants.

5. Procédé selon l'une quelconque des revendications précédentes comprenant en outre : l'obtention d'informations spécifiques au dispositif terminal incluses dans la demande de contenu informationnel, et la définition du format d'affichage du contenu informationnel dynamique généré (140, 140a, 140b, 140c) sur la base des informations spécifiques au dispositif obtenues, dans lequel le format d'affichage est au moins l'un parmi les éléments suivants : texte, image, vidéo ; animation, audio, animation 3D, simulation 3D, réalité augmentée, réalité virtuelle et/ou réalité mixte.

6. Procédé selon la revendication 5, comprenant en outre l'obtention d'un ou plusieurs modèles 3D (306) à partir du système serveur (104) en vue de l'affichage du contenu informationnel dynamique généré (140, 140a, 140b, 140c), si le format d'affichage est défini comme étant une réalité augmentée, une réalité virtuelle et/ou une réalité mixte.

7. Unité de calcul (106) permettant de générer un contenu informationnel dynamique (140, 140a, 140b, 140c) d'un système de transport de personnes (110), l'unité de calcul (106) comprend :
- une unité de calcul (410) comprenant au moins un processeur, et
- une unité de mémoire (420) comprenant au moins une mémoire stockant au moins une partie d'un code de programme informatique (425), l'unité de traitement (410) étant configurée pour amener l'unité de calcul (106) à au moins réaliser :
la réception d'une demande de contenu informationnel à partir d'un dispositif terminal (102),
**caractérisée en ce qu'**elle amène l'unité de calcul (106) à :
obtenir des informations d'état en temps réel (304a, 304b) représentant l'état actuel d'au moins une partie du système de transport de personnes (110) à partir d'un système serveur (104),
générer une carte de document dynamique (302a, 302b ,302b) comprenant des références à un ou plusieurs sujets de contenu informationnel sur la base au moins des informations d'état en temps réel obtenues (304a, 304b), dans laquelle la carte de document dynamique est une carte de document basée sur le langage XML (Extensible Markup Language, langage de balisage extensible),
récupérer le ou les sujets de contenu informationnel référencés dans la carte de document dynamique (302a, 302b ,302b) à partir du système serveur (104),
générer le contenu informationnel dynamique (140, 140a, 140b, 140c) sur la base du ou des sujets de contenu informationnel récupérés à partir du système serveur (104), et
fournir le contenu informationnel dynamique généré (140, 140a, 140b, 140c) au dispositif terminal (102) en vue de l'affichage du contenu informationnel dynamique (140, 140a, 140b, 140c).

8. Unité de calcul (106) selon la revendication 7, dans lequel les informations d'état (304a, 304b) comprennent des données basées sur des capteurs de l'au moins une partie du système de transport de personnes (110), des données spécifiques au système, des données liées au service de l'au moins une partie du système de transport de personnes (110) et/ou des données temporelles.

9. Unité de calcul (106) selon la revendication 8, dans lequel les données spécifiques au système comprennent des informations d'identification de l'au moins une partie du système de transport de personnes (110), des informations de modèle d'au moins une partie du système de transport de personnes (110) et/ou des informations de localisation.

10. Unité de calcul (106) selon la revendication 8 ou 9, dans laquelle les données liées au service de l'au moins une partie du système de transport de personnes (110) comprennent un ou plusieurs besoins de service, une ou plusieurs actions recommandées, un historique des services, des informations sur les pièces de rechange, une ou plusieurs lettres d'information et/ou des données de cycle de vie des composants.

11. Unité de calcul (106) selon l'une quelconque des revendications 7 à 10, configurée en outre pour :
obtenir des informations spécifiques au dispositif terminal incluses dans la demande de contenu informationnel, et
définir un format d'affichage du contenu informationnel dynamique généré (140, 140a, 140b, 140c) sur la base des informations spécifiques au dispositif obtenues, dans laquelle le format d'affichage est au moins l'un parmi les éléments suivants : texte, image, vidéo ; animation, audio, animation 3D, simulation 3D, réalité augmentée, réalité virtuelle et/ou réalité mixte.

12. Unité de calcul (106) selon la revendication 11, configurée en outre pour obtenir un ou plusieurs modèles 3D (306) à partir du système serveur (104) en vue de l'affichage du contenu informationnel dynamique généré (140, 140a, 140b, 140c), si le format d'affichage est défini comme étant une réalité augmentée, une réalité virtuelle et/ou une réalité mixte.

13. Système (100) permettant de générer un contenu informationnel dynamique (140, 140a, 140b, 140c) d'un système de transport de personnes (110), comprenant :
- un dispositif terminal (102) comprenant un ou plusieurs dispositifs de sortie permettant d'afficher le contenu informationnel dynamique généré (140, 140a, 140b, 140c),
- un système serveur (104) comprenant un ou plusieurs serveurs (103a-103n), et
- une unité de calcul (106) selon l'une quelconque des revendications 7 à 12.

14. Système (100) selon la revendication 13, dans lequel l'unité de calcul (106) est une unité externe, une unité interne du dispositif terminal (102) ou une unité interne du système serveur (104).

15. Programme informatique (425) comprenant des instructions qui, lorsqu'elles sont exécutées par au moins un processeur d'une unité de calcul (106), amènent l'unité de calcul (106) à réaliser le procédé selon l'une quelconque des revendications 1 à 6.
